# EUROPÄISCHE PATENTSCHRIFT

(11) **EP 1 464 546 B1**
(45) Veröffentlichungstag und Bekanntmachung des Hinweises auf die Patenterteilung: **07.06.2006**
(21) Anmeldenummer: 04007532.7
(22) Anmeldetag: 29.03.2004
(51) Int. Cl.: B60R 19/02, B60R 19/34, B60R 19/18

(54) **Stossfängersystem für engen Bauraum**
Bumper system for narrow mounting space
Système de pare-choc pour un espace d'assemblage étroit

(30) Priorität: 01.04.2003 DE 10314905
(43) Veröffentlichungstag der Anmeldung: 06.10.2004
(73) Patentinhaber: Benteler Automobiltechnik GmbH, 33102 Paderborn (DE)
(72) Erfinder: Müller, Oliver, 33100 Paderborn (DE); Hügel, Claus, 33096 Paderborn (DE); Straznikiewicz, Dariusz, 33102 Paderborn (DE)
(74) Vertreter: Vièl, Christof

(56) Entgegenhaltungen:
- DE-A- 19 635 285
- US-A1- 2002 101 086
- US-A1- 2002 113 447
- US-B1- 6 398 275

## Beschreibung

Die Erfindung betrifft ein Stossfängersystem mit zwei an jeweils einen Längsträger festlegbaren Deformationselementen und einem an den Deformationselementen befestigten Querträger mit einem U-Profil mit einem Mittelsteg und zwei davon divergierenden Schenkeln, wobei die Höhe bzw. Breite des Querträgers kleiner als die jeweilige Höhe der Deformationselemente ist und die Deformationselemente das U-Profil mit ihrem die Höhe bzw. Breite des Querträgers übersteigenden Anteil überlagern, wobei eine Halbschale vom Längsträger bis zu einer rückwärtigen Seite des U-Profils reicht und die Deformationselemente mit einer rückwärtigen Flanschplatte am Längsträger festlegbar sind, nach dem Oberbegriff des Anspruchs 1.

Stossfängersysteme sind an Front und Heck eines Kraftfahrzeugs zwischen der die Karosserie abschließenden Kunststoffverschalung und dem Rahmen des Kraftfahrzeugs angeordnet und bestehen in der Regel aus einem Querträger, der über je ein Deformationselement an den beiden Längsträgern des Fahrzeugs befestigt ist, wobei in erster Linie die Deformationselemente kinetische Aufprallenergie absorbieren, indem sie sie in Verformungsarbeit umwandeln. Das Stossfängersystem trägt somit dazu bei, dass die Fahrzeugstruktur bei einem Aufprall mit geringer Geschwindigkeit keine Beschädigung davonträgt. Neben den heutigen Gesetzesanforderungen im Bereich der Barrieren- und Wandauffahrten des Low-Speed-Tests (bis 16 km/h) sind jedoch auch die Bauraumgegebenheiten zu beachten, denn häufig steht bei einer herkömmlichen Bauweise nicht ausreichend Platz für den Querträger oder genug Deformationsweg für die Deformationselemente zur Verfügung. Zudem werden oft noch eine oder mehrere Buchsen für einen Abschlepphaken in das Stoßfängersystem integriert.

Zum Stand der Technik gehört ein Deformationselement, das aus zwei Blechhalbschalen mit oder ohne Sicken besteht, wie es beispielsweise die JP 02175452 A oder die DE 19635285 A1 zeigen. Die DE 199 58 996 A1 zeigt ein Querträgermodul für einen front- oder heckseitigen Stirnbereich eines Kraftfahrzeugs mit einem kastenförmigen Biegeträger, von dem zwei zueinander parallel beabstandete Deformationseinheiten für die Anbindung an jeweils einen Längsträger einer Karosseriestruktur des Kraftfahrzeugs abragen. Der Biegeträger ist modular aufgebaut und besteht aus zwei Ver kalprofilen, die über wenigstens zwei U-förmige Horizontalprofile miteinander verbunden sind, wobei die U-förmigen Horizontalprofile mit den Schenkeln des U-Profils zur Fahrbahn zeigen. An einer Rückseite des hinteren Profilgurtes ist zudem eine Bundschweißmutter angeschweißt, die koaxial fluchtend zu entsprechenden, nicht dargestellten Durchbrüchen in den beiden Profilgurten sowie den U-Schenkeln des mittleren Horizontalprofils ausgerichtet ist und einen Teil einer Abschleppvorrichtung darstellt.

Um einen optimalen Schutz für den Aufbau des Kraftfahrzeugs zu erhalten, muss das Deformationselement möglichst mittig auf dem jeweiligen Längsträger angebracht werden. Zugleich muss gewährleistet sein, dass die Krafteinleitung möglichst vollständig in die Deformationselemente erfolgt. Wenn der Aufprall daher nicht direkt auf das Deformationselement trifft, leitet der Querträger die Aufprallenergie in die Deformationselemente weiter, sofern er nicht selbst Teile der Aufprallenergie in Verformungsenergie umwandelt. Der Erfindung liegt das Problem zugrunde, dass sich zwischen den Längsträgern des Fahrzeugs, an die die Deformationselemente festgelegt werden müssen, häufig eine große Eintrittsöffnung für Kühlluft in den Motorraum befindet, die nicht von einem Querträger verdeckt werden darf. Einen an sich bekannten gabelförmigen Querträger einzusetzen, der die Eintrittsöffnung für Kühlluft quasi umrahmt und an der Anbindung zu den Deformationselementen wieder zusammenläuft, führt zum einen zu Gewichtsproblemen und ist auch mit dem Fahrzeugdesign nicht immer vereinbar. Einen Querträger einzusetzen, der unterhalb der Eintrittsöffnung verläuft und dann nur zur Anbindung an die Deformationselemente eine Ausbuchtung nach oben erhält, führt insbesondere dann zu einem außer Verhältnis stehenden produktionstechnischen Aufwand, wenn der Querträger einteilig aus einer Platine geformt wird. Der Erfindung liegt daher die Aufgabe zugrunde, ein Stossfängersystem aufzuzeigen, dass auch bei einem zwischen den Längsträgern eingeschränkten Bauraum hinsichtlich Crashperformance, Herstellungsverfahren und Gewicht optimiert ist.

Die Erfindung löst diese Aufgabe mit dem kennzeichnenden Teil des Anspruchs 1, indem die andere Halbschale sich vom Längsträger über das U-Profil bis zu einer vorderen Seite des Querträgers erstreckt und die Deformationselemente mit einer vorderen Schließplatte am U-Profil festlegbar sind. Demnach ist die Höhe des Querträgers gegenüber der Höhe der Deformationselemente reduziert. Es handelt sich daher um einen besonders kleinen und zierlichen Querträger, der die Lufteintrittsöffnung nicht oder nur geringfügig überdeckt. Um diesen Querträger auf die Zug- und Druckbeanspruchung eines Aufpralls auszulegen, aus einem U-förmigen Profil, vorzugsweise einem Stahlprofil. Auf die Umstellung von Flanschen wie bei einem herkömmlichen Hutprofil kann aus Festigkeitsgründen verzichtet werden, was zusätzlich Gewicht und Bauraum spart. An das U-Profil kann besonders einfach ein Deformationselement angebunden werden. Das Deformationselement ist gemäß Anspruch 1 so gestaltet, dass der Teil, der die Höhe bzw. Breite des Querträger überragt, nach vorne über den Mittelsteg des U-Profils vorgezogen ist, so dass er das U-Profil überlagert. Das Deformationselement kann sowohl an dem rückwärtigen Schenkel als auch an dem vorderen Schenkel und/ oder am Mittelsteg des Querträgers befestigt werden.

Eine Ausgestaltung der Erfindung besteht darin, daß die obere Halbschale sich vom Längsträger über den Mittelsteg des U-Profils bis zu einer vorderen Seite des Querträgers erstreckt und die Deformationselemente mit einer vorderen Schließplatte am U-Profil festlegbar sind.

In einer bevorzugten Variante ist das U-Profil mit einem Schließblech versehen, was zur Versteifung des Querträgers beiträgt und ein Zusammenklappen der Schenkel des U-Profils verhindert. In einer weiteren Variante ist in die Schließplatte eines oder beider Deformationselemente je eine Abschleppbuchse in der Form integriert, dass die Abschleppbuchse durch eine Öffnung in der Schließplatte gesteckt und über einen Halter in ihrem der Öffnung abgewandten Bereich ausschließlich mit der Schließplatte verbunden ist. Durch diesen Aufbau lässt sich die Abschleppbuchse elegant in das Stossfängersystem integrieren.

Das U-Profil des Querträgers wird vorzugsweise aus einer Platine warmgeformt, um eine gute Maßhaltigkeit und die gewünschten Festigkeitswerte zu erzielen. Es kann auch kaltgeformt sein. Als Deformationselement kommt bevorzugt ein an sich aus dem Stand der Technik bekanntes Deformationselement zum Einsatz, dass aus einer unteren und einer oberen Halbschale besteht, in die beispielsweise Sicken eingebracht sind. Die untere Halbschale reicht vom Längsträger bis zum rückwärtigen Schenkel des zur Fahrbahn hin zeigenden U-Profils. Die obere Halbschale ist mindestens um die Breite des Mittelstegs des U-Profils verlängert, so dass sie das U-Profil überlagert und sich bis zum vorderen Schenkel des U-Profils erstreckt. Die obere Halbschale wird zum einen entlang ihrer Längskanten mit der unteren Halbschale gefügt, zum anderen wird sie mittels eines vorderen Schließblechs geschlossen und über dieses Schließblech an dem Querträger an dessen vorderem Schenkel festgelegt. Auf diese Weise kann das Deformationselement einfach mit dem Querträger gefügt werden. Die rückwärtige Anbindung des Deformationselements an den Längsträger erfolgt auf herkömmliche Art über eine Flanschplatte.

Durch das Vorziehen des die Höhe des Querträgers übersteigenden Teils des Deformationselements bis an den vorderen Schenkel des Querträgers, steht im Crashfall mehr Deformationsweg zur Verfügung, was eine größere Menge an Energieumwandlung von Aufprallenergie in Verformungsenergie ermöglicht. Bei einem Aufprall in Richtung der Mittellängsebene des Fahrzeugs wird zunächst der Querträger getroffen, der bis auf die Höhe der Deformationselemente nachgibt und die Aufprallenergie in die Deformationselemente überträgt, die die Aufprallenergie in Verformungsenergie umwandeln. Bei einem aus der Mittellängsebene heraus seitlich versetztem Aufprall wird das Deformationselement mit seinem oberen Teil direkt getroffen und kann sofort Verformungsarbeit leisten. Besonders geeignet ist das erfindungsgemäße Stoßfängersystem für Fahrzeuge, die keine Pendeltests absolvieren müssen, wie beispielsweise Geländewagen.

Um eine Momentübertragung nach dem Prinzip eines Hebelarms auf den Längsträger auszuschließen, sollte eine Abschleppbuchse möglichst in Verlängerung des Längsträgers platziert werden. Da bereits die Deformationselemente mittig auf dem Längsträger angeordnet sind, bietet sich eine Integration der Abschleppbuchse im Bereich der Deformationselemente an. Die Abschleppbuchse wird erfindungsgemäß in die Schließplatte des oberen Teils des Deformationselementes integriert, indem die Abschleppbuchse durch eine Öffnung in der Schließplatte gesteckt und über einen Halter in ihrem der Öffnung abgewandten Bereich mit der Schließplatte verbunden ist. Dadurch hat die Abschleppbuchse außer über die Schließplatte keine weitere Verbindung zum Querträger oder zu dem Deformationselement.

Das erfindungsgemäße Stoßfängersystem nutzt den vorhandenen Bauraum insbesondere bei größeren Lufteinlässen in den Motorraum optimal aus. Es verfügt über eine verbessertes Crashverhalten bei Low-Speed-Crashs und über ein geringeres Gewicht als herkömmliche Lösungen. Zudem beeinträchtigt die Abschleppbuchse weder das Faltverhalten des Querkägers noch das des Deformationselements.

Nachfolgend ist ein Ausführungsbeispiel der Erfindung anhand der Figuren genauer beschrieben.
Figur 1 zeigt einen erfindungsgemäßen Querträger 1 im Längsschnitt.
Figur 2 zeigt einen Ausschnitt eines erfindungsgemäßen Stoßfängersystems 5 mit einem Teil des Querträgers 1 und einem daran angebundenen Deformationselement 6.
Figur 3 zeigt das Stoßfängersystem 5 mit dem Querträger 1 und beiden Deformationselementen 6 und 6' direkt von vorn.
Figur 4 zeigt das Stoßfängersystem 5 von einer vorderen perspektivischen Ansicht.
Figur 5 zeigt das Stoßfängersystem 5 aus einer rückwärtigen perspektivischen Ansicht.
Figur 6 zeigt das Stoßfängersystem 5 aus einer weiteren rückwärtigen perspektivischen Ansicht.
Figur 7 zeigt einen Längsschnitt durch das Stoßfängersystem 5 im Bereich der Anbindung des Deformationselements 6 an den Querträger 1.
Figur 8 zeigt einen Querschnitt durch das Deformationselement 6 im Bereich einer oberen Halbschale 7 und einer Anbindung an eine Abschleppbuchse 11.
Die Figuren 9a bis 9d zeigen alternative Ausgestaltungen hinsichtlich der Einbaulage des Querträgers 1.

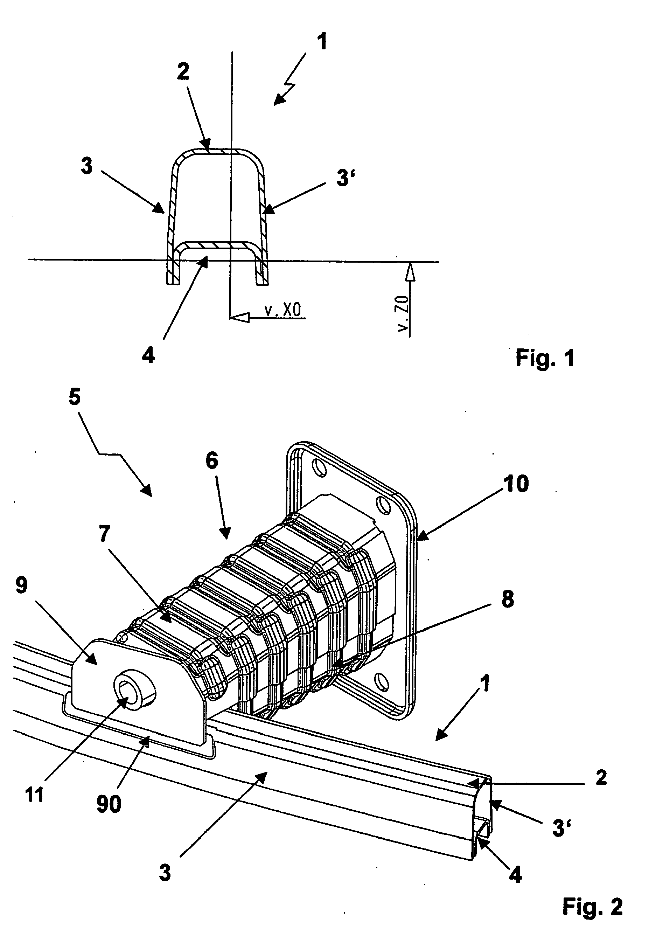

Figur 1 verdeutlicht das im Längsschnitt U-förmige Profil des Querträgers 1. Die Figur zeigt das U-Profil 1 in einer Einbaustellung, bei der die Schenkel des U-Profils im montierten Zustand nach unten zur Fahrbahn zeigen. Das Profil 1 verfügt über einen Mittelsteg 2 mit zwei davon divergierenden Schenkeln 3 und 3', die nach unten zur Straße zeigen. Das U-Profil ist mit einem U-förmigen Schließblech 4 geschlossen, dessen Schenkel ebenfalls nach unten zur Straße zeigen. Durch das Schließblech 4 ist der Querträger 1 insgesamt versteift. Das Schließblech 4 stellt jedoch nur eine Alternative dar, der Querträger 1 könnte auch durch andere Maßnahmen wie beispielsweise Stege versteift sein.

Figur 2 zeigt die erfindungsgemäße Anbindung des Querträgers 1 an das Deformationselement 6. Das U-Profil 1 ist wieder mit dem U-förmigen Schließblech 4 geschlossen. Das Deformationselement 6, über dessen Längenausdehnung Sicken eingebracht sind, verfügt über eine untere Halbschale 8. Die untere Halbschale 8 erstreckt sich zwischen dem rückwärtigen Flansch 10 des Deformationselements 6, der für die Anbindung des gesamten Stoßfängersystems 5 an einen nicht weiter dargestellten Längsträger eines Kraftfahrzeugs, vorzugsweise eines Geländewagens, vorgesehen ist, und zwischen dem rückwärtigen dem Fahrzeug zugewandten Steg 3' des U-Profils 1. Eine obere Halbschale 7 des Deformationselements 6 erstreckt sich vom rückwärtigen Flansch 10 bis zum vorderen Schenkel 3 des Querträgers 1. Die obere Halbschale 7 überlagert den Mittelsteg 2 des U-Profils 1 vollständig. Sie ist mit einem Schließblech 9 geschlossen. Das Schließblech 9 ist über einen Flansch 90 an den vorderen dem Fahrzeug abgewandten Schenkel 3 des Querträgers 1 gefügt. In das Schließblech 9 ist eine Abschleppbuchse 11 integriert.

Das dargestellte erfindungsgemäße Stoßfängersystem 5 lässt sich einfach und prozesssicher herstellen. Das U-Profil 1 wird vorzugsweise aus einer Platine einteilig warmgeformt, wobei sich durch eine eventuelle Werkzeughärtung die erforderlichen Materialeigenschaften genau einstellen lassen. Ebenso kann das Schließblech 4 hergestellt werden. Falls erforderlich kann der Querträger 1 noch gebogen werden. Für das Deformationselement 6 werden zunächst die Halbschalen 7 und 8 auf herkömmliche Weise hergestellt, wobei die obere Halbschale 7 länger als die untere Halbschale 8 ist. Die Halbschalen 7 und 8 werden sodann entlang ihrer Längskanten miteinander und an ihrem rückwärtigen Ende mit dem Flansch 10 gefügt. Der Querträger 1 wird an die untere Halbschale 8 angelegt, er kann am Mittelsteg 2 mit der oberen Halbschale 7 und/ oder am rückwärtigen Schenkel 3' mit der unteren Halbschale 8 gefügt werden. Die obere Halbschale 7 wird mit dem Schließblech 9, in das bereits vorher die Abschleppbuchse 11 integriert worden ist, geschlossen und über den Flansch 90 mit dem vorderen Schenkel 3 des Querträgers 1 verbunden. Auf diese Weise werden insbesondere aufwändige Fügeoperationen zwischen dem Querträger 1 und dem Deformationselement 6 auf ein Minimum reduziert.

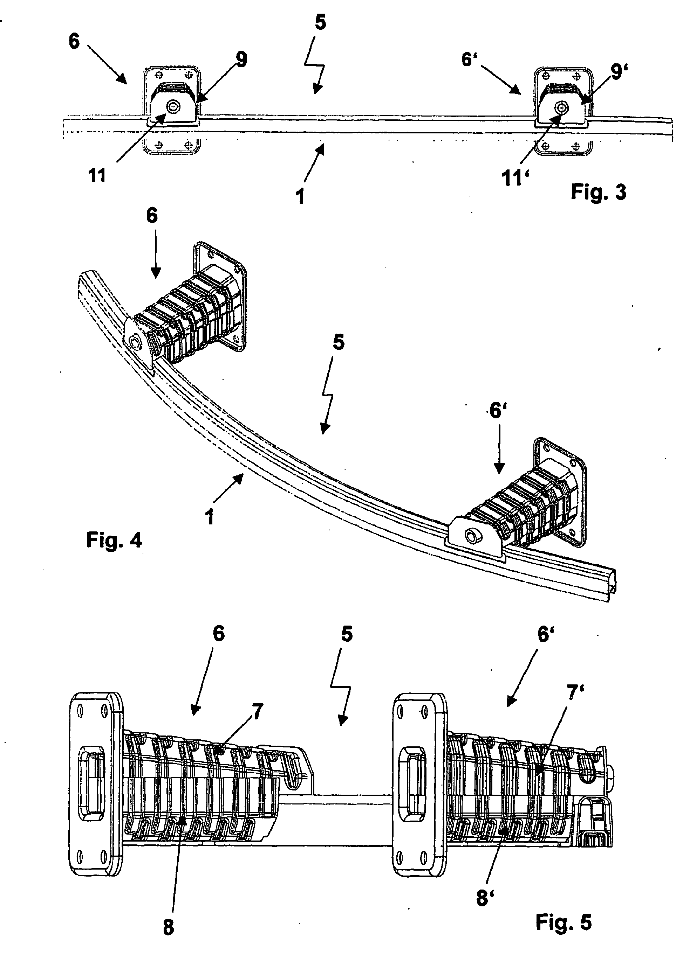

Figur 3 zeigt das erfindungsgemäße Stoßfängersystem 5 mit dem vollständigen Querträger 1 und beiden Deformationselementen 6 und 6' von vorn. Deutlich ist zu erkennen, dass die Deformationselemente 6 und 6' durch das jeweilige Schließblech 9 und 9' geschlossen worden sind. In dieser Alternative ist in jedes Schließblech 9 und 9' eine Abschleppbuchse 11 und 11' integriert.

Figur 4 zeigt das erfindungsgemäße Stoßfängersystem 5 aus einer vorderen perspektivischen Ansicht. Der Querträger 1 ist gebogen, die Deformationselemente 6 und 6' sind in der Biegung an den Querträger 1 gefügt.

Figur 5 zeigt das erfindungsgemäße Stoßfängersystem 5 aus einer rückwärtigen Perspektive. An der Innenseite des Deformationselements 6 wird die obere Halbschale 7 von der unteren Halbschale 8 überlappt. An der Außenseite des Deformationselements 6' wird die untere Halbschale 8' von der oberen Halbschale 7' überlappt.

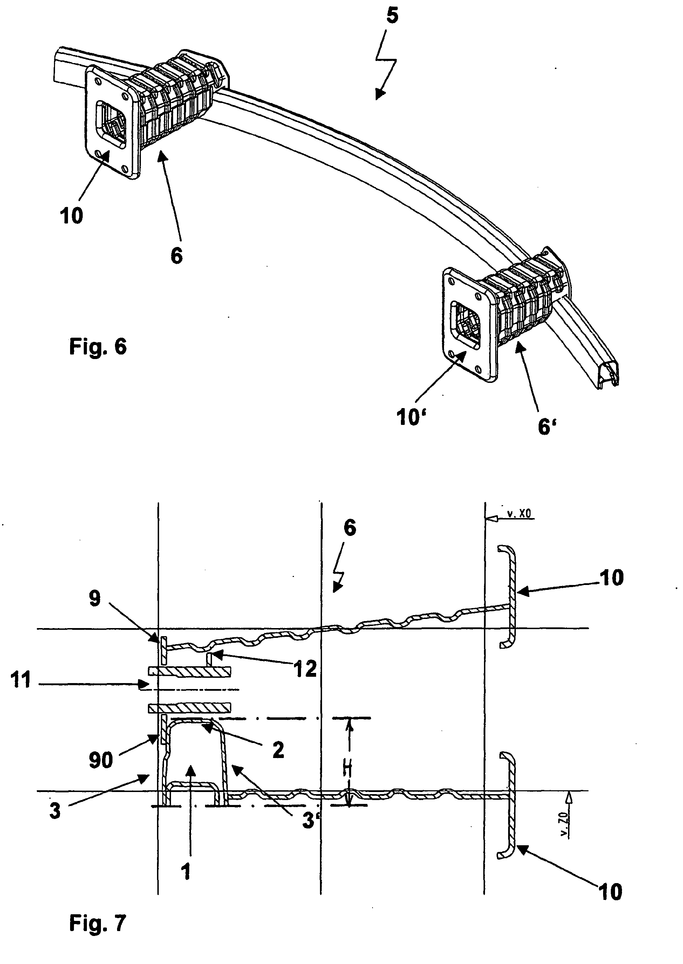

Figur 6 zeigt das erfindungsgemäße Stoßfängersystem 5 aus einer weiteren rückwärtigen Perspektive. Die Deformationselemente 6 und 6' sind im Bereich der rückwärtigen Flansche 10 und 10', mit denen das Stoßfängersystem 5 an je einem Längsträger eines Kraftfahrzeugs festlegbar ist, offen.

Figur 7 stellt einen Längsschnitt durch ein erfindungsgemäßes Stoßfängersystem 5 im Bereich der Anbindung des Deformationselements 6 an den Querträger 1 dar. Es ist zu erkennen, dass das Deformationselement 6 über mehrere Sicken verfügt und mittels des rückwärtigen Flansches 10 an einem Längsträger festlegbar ist. Das Deformationselement 6 ist fast doppelt so hoch wie der Querträger 1 und überlagert den Mittelsteg 2 des U-Profils 1 bis zu seinem vorderen Schenkel 3. Dadurch steht dem Deformationselement 6 der Weg von der Schließplatte 9 bis zum rückwärtigen Schenkel 3' des Querträgers 1 als weiterer Deformationsweg zur Verfügung. Die Abschleppbuchse 11 ist durch eine Öffnung in der Schließplatte 9 gesteckt und liegt oberhalb des Querträgers 1. Die Schließplatte 9 ist mit dem Deformationselement 6 und über den Flansch 90 mit dem Querträger 1 verbunden. Die Abschleppbuchse 11 ist in ihrem von der vorderen Öffnung abgewandten Bereich über eine Halterung 12 mit der Schließplatte 9 verbunden. Die Halterung 12 hat außer über die Schließplatte 9 keine weitere Verbindung mit dem Deformationselement 6 und dem Querträger 1. Dadurch kann das Stoßfängersystem in einem Crashfall unbehindert Verformungsarbeit leisten.

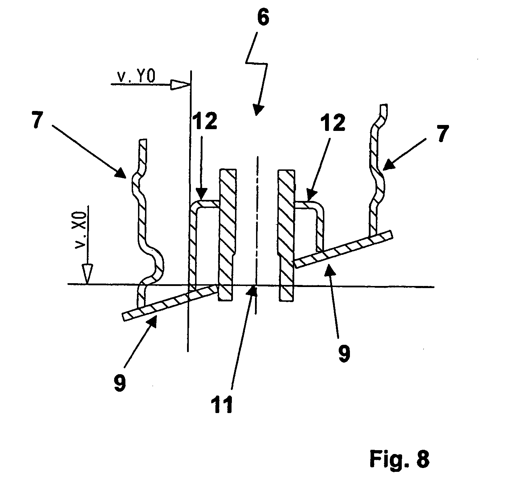

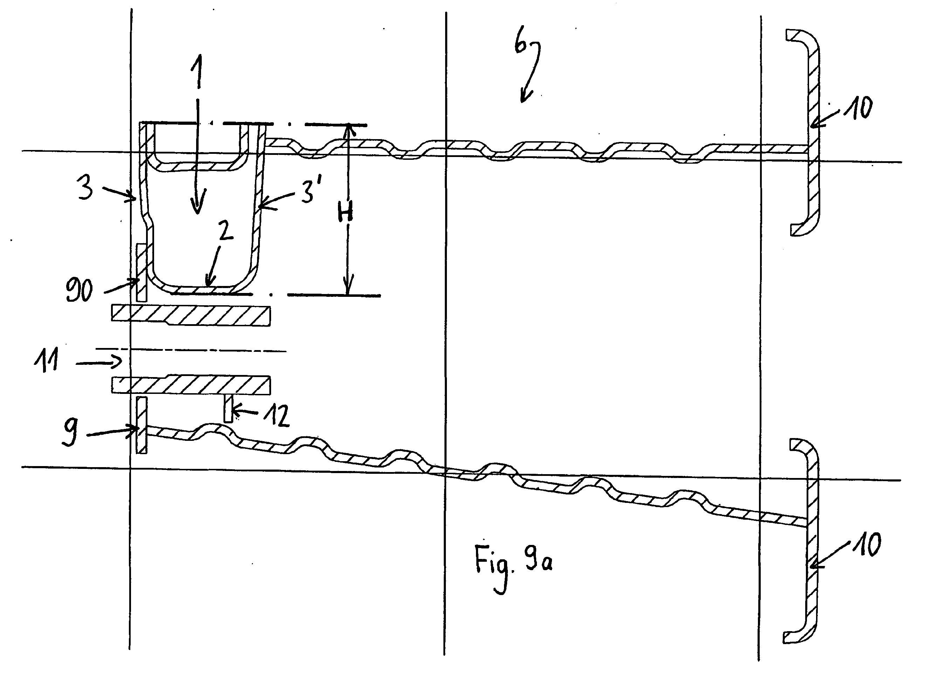

Figur 8 zeigt einen Querschnitt durch das Deformationselement 6 im Bereich der oberen Halbschale 7 und der erfindungsgemäßen Anbindung an die Abschleppbuchse 11. Es ist zu erkennen, dass die Abschleppbuchse 11 ausschließlich über das Schließblech 9 mit der Halbschale 7 verbunden ist. Der Halter 12 ist im Bereich der Abschleppbuchse 11 angesetzt, der der vorderen Öffnung im Schließblech 9 abgewandt ist, und wieder mit dem Schließblech 9 verbunden.

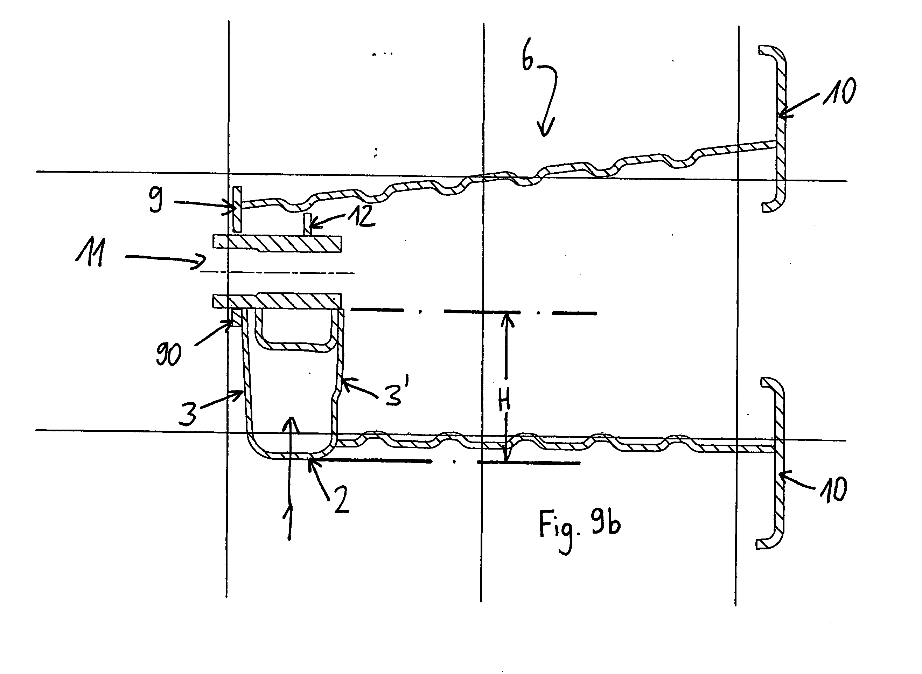

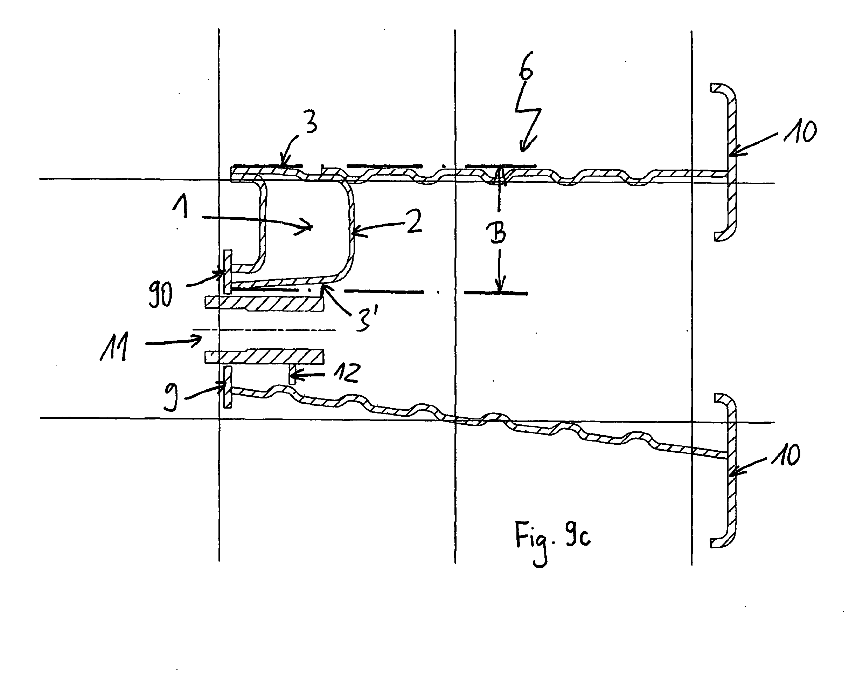

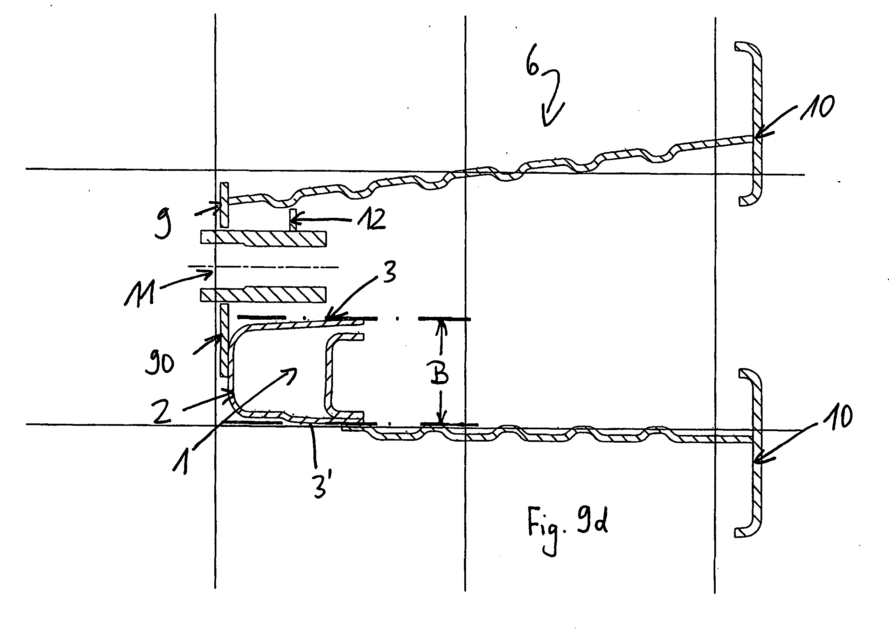

Die Figuren 9a bis 9d zeigen, daß es ebenfalls möglich ist, den Querträger 1 in anderen Einbaulagen als diejenige, bei der die Schenkel des U-Profils 1 im montierten Zustand nach unten zur Fahrbahn zeigen, anzuordnen. Hierbei stellt jeweils die untere Bildebene die Straße dar. Es ist ersichtlich, daß die Schenkel des U-Profils 1 auch nach oben, vom Fahrzeug weg oder zum Fahrzeug hin gerichtet sein können und eine Anordnung des U-Profils 1 sowohl an der oberen Halbschale 7 als auch an der unteren Halbschale 8 bzw. sowohl ober- als auch unterhalb der Abschleppbuchse 11 möglich ist.

## Patentansprüche

1. Stossfängersystem (5) mit zwei an jeweils einen Längsträger festlegbaren Deformationselementen (6 und 6') und einem an den Deformationselementen (6 und 6') befestigten Querträger (1) mit einem U-Profil (1) mit einem Mittelsteg (2) und zwei davon divergierenden Schenkeln (3 und 3'), wobei die Höhe (H) bzw. Breite (B) des Querträgers (1) kleiner als die jeweilige Höhe der Deformationselemente (6 und 6') ist und die Deformationselemente (6 und 6') das U-Profil (1) mit ihrem die Höhe (H) bzw. Breite (B) des Querträgers (1) übersteigenden Anteil überlagern, wobei eine Halbschale (7, 8) vom Längsträger bis zu einer rückwärtigen Seite des U-Profils (1) reicht und die Deformationselemente (6 und 6') mit einer rückwärtigen Flanschplatte (10) am Längsträger festlegbar sind, **dadurch gekennzeichnet, dass** die andere Halbschale (7, 8) sich vom Längsträger über das U-Profil (1) bis zu einer vorderen Seite des Querträgers (1) erstreckt und die Deformationselemente (6 und 6') mit einer vorderen Schließplatte (9) am U-Profil (1) festlegbar sind.

2. Stossfängersystem (5) nach Anspruch 1, **dadurch gekennzeichnet, dass** die obere Halbschale (7) sich vom Längsträger über den Mittelsteg des U-Profils (1) bis zu einer vorderen Seite des Querträgers (1) erstreckt und die Deformationselemente (6 und 6') mit einer vorderen Schließplatte (9) am U-Profil (1) festlegbar sind.

3. Stossfängersystem (5) nach Anspruch 1 oder Anspruch 2, **dadurch gekennzeichnet, dass** das U-Profil (1) mit einem Schließblech (4) versehen ist.

4. Stoßfängersystem (5) nach einem der vorhergehenden Ansprüche, **dadurch gekennzeichnet, dass** in die Schließplatte (9) eines oder beider Deformationselemente (6 und 6') je eine Abschleppbuchse (11) in der Form integriert ist, dass die Abschleppbuchse (11) durch eine Öffnung in der Schließplatte (9) gesteckt und über einen Halter (12) in ihrem der Öffnung abgewandten Bereich ausschließlich mit der Schließplatte (9) verbunden ist.

5. Stossfängersystem (5) nach einem der vorhergehenden Ansprüche, **dadurch gekennzeichnet, dass** das U-Profil (1) einteilig aus einer Platine warmgeformt ist.

## Claims

1. A bumper system (5) with two deformation elements (6 and 6'), each attachable to a longitudinal support, and, fastened to said deformation elements (6 and 6'), a transverse member (1) with a U-shaped profile (1) that has a cross-piece (2) and, diverging therefrom, two limbs (3 und 3'), the height (H) and width (B) of the transverse member (1) being smaller than the height of each of the deformation elements (6 and 6'), and the deformation elements (6 and 6') overlapping the U-shaped profile (1) by the amount that they exceed the height (H) and the width (B) of the transverse member (1), one half shell (7, 8) extending from the longitudinal support to a rear side of the U-shaped profile (1) and the deformation elements (6 and 6') being attachable by means of a flange plate (10) at the rear end thereof to the respective longitudinal support, **characterised in that** the other half shell (7, 8) extends from the longitudinal support over the U-shaped profile (1) to a front side of the transverse member (1) and the deformation elements (6 and 6') are attachable to the U-shaped profile (1) by means of a front locking plate (9).

2. The bumper system (5) according to claim 1, **characterised in that** the upper half shell (7) extends from the longitudinal support over the cross-piece of the U-shaped profile (1) to a front side of the transverse member (1) and the deformation elements (6 and 6') are attachable to the U-shaped profile (1) by means of a front locking plate (9).

3. The bumper system (5) according to claim 1 or 2, **characterised in that** the U-shaped profile (1) is provided with a closure plate (4).

4. The bumper system (5) according to one of the preceding claims, **characterised in that** a tow socket (11) is integrated in the locking plate (9) of one or both deformation elements (6 and 6') in such manner that the tow socket (11) is inserted through a hole in the locking plate (9) and is connected exclusively with the locking plate (9) via a retaining member (12) in the area of the socket disposed away from the hole.

5. The bumper system (5) according to one of the preceding claims, **characterised in that** the U-shaped profile (1) is thermoformed in one piece from a blank.

## Revendications

1. Système de pare-chocs (5) avec deux éléments déformables (6, 6') pouvant être fixés chacun à un longeron et avec une traverse (1) fixée aux éléments de déformation (6, 6') et ayant un profil en U (1) présentant une entretoise centrale (2) dont divergent deux branches (3, 3'), la hauteur (H) ou la largeur (B) de la traverse (1) respectivement étant inférieures à la hauteur respective des éléments de déformation (6, 6'), et les éléments de déformation (6, 6') chevauchant le profil en U (1) avec leurs parties dépassant la hauteur (H) ou la largeur (B) respectivement de la traverse (1), une demi-coque (7, 8) s'étendant de la traverse jusqu'à une face arrière du profil en U (1) et les éléments de déformation (6 et 6') pouvant être fixés aux longerons à l'aide d'une plaque de bride arrière (10), **caractérisé en ce que** l'autre demi-coque (7, 8) s'étend depuis le longeron par-dessus le profil en U (1) jusqu'à une face avant de la traverse (1), et les éléments de déformation (6 et 6') peuvent être fixés au profil en U (1) avec une plaque de fermeture avant (9).

2. Système de pare-chocs (5) selon la revendication 1, **caractérisé en ce que** la demi-coque supérieure (7) s'étend depuis le longeron au-dessus de l'entretoise du profil en U (1) jusqu'à une face avant de la traverse (1) et les éléments de déformation (6 et 6') peuvent être fixés au profil en U (1) avec une plaque de fermeture avant (9).

3. Système de pare-chocs (5) selon l'une des revendications 1 ou 2, **caractérisé en ce que** le profil en U (1) est muni d'une plaque de fermeture (4).

4. Système de pare-chocs (5) selon l'une des revendications précédentes, **caractérisé en ce qu'**une prise de remorquage (11) est intégrée dans la forme dans la plaque de fermeture (9) d'un ou de chacun des deux éléments de déformation (6 et 6'), **en ce que** la prise de remorquage (11) est introduite à travers une ouverture réalisée dans la plaque de fermeture (9) et qu'elle est reliée dans la zone opposée à l'ouverture uniquement à la plaque de fermeture (9) par l'intermédiaire d'un support (12).

5. Système de pare-chocs (5) selon l'une des revendications précédentes, **caractérisé en ce que** le profil en U (1) est formé à chaud en une seule pièce à partir d'une platine.
